## Europäisches Patentamt
## European Patent Office
## Office européen des brevets

(19)

(11) Veröffentlichungsnummer : **0 422 424 B1**

(12)
# EUROPÄISCHE PATENTSCHRIFT

(45) Veröffentlichungstag der Patentschrift :
**08.11.95 Patentblatt 95/45**

(51) Int. Cl.⁶ : **H04R 9/10, H04M 1/03**

(21) Anmeldenummer : **90118074.5**

(22) Anmeldetag : **20.09.90**

(54) **Elektrodynamischer Wandler.**

(30) Priorität : **09.10.89 DK 4983/89**

(43) Veröffentlichungstag der Anmeldung :
**17.04.91 Patentblatt 91/16**

(45) Bekanntmachung des Hinweises auf die
Patenterteilung :
**08.11.95 Patentblatt 95/45**

(84) Benannte Vertragsstaaten :
**AT BE CH DE DK ES FR GB GR IT LI LU NL SE**

(56) Entgegenhaltungen :
**DE-A- 2 854 560
GB-A- 983 997
US-A- 4 529 846
US-A- 4 796 288**

(73) Patentinhaber : **KIRK ACOUSTICS A/S
Fuglevangsvej 45
DK-8700 Horsens (DK)**

(72) Erfinder : **Hansen, Kaj Borge
Klintevej 9
DK-8700 Horsens (DK)**

(74) Vertreter : **WITTRUP, Flemming
c/o Hofman-Bang & Boutard A/S
Adelgade 15
DK-1304 Copenhagen K (DK)**

EP 0 422 424 B1

## Beschreibung

Die Erfindung betrifft einen elektrodynamischen Wandler mit einer Schwingspule, einer Membran und einem Magnetsystem, welche von einem Gehäuse und einem Deckel umschlossen sind, gemäss dem ersten Teil des Anspruches 1.

Ein solcher dynamischer Wandler ist bekannt (US-A-4 529 846). Derartige Wandler werden in Telefonapparaten verwendet und ihre wichtigsten Eigenschaften sind:

eine gute akustische Ansprechempfindlichkeit eine sehr geringe Empfindlichkeit gegenüber äußeren magnetischen Feldern

eine hohe Isolation zwischen dem Deckel und den Anschlüssen gegenüber elektrischen Feldern geringe Herstellkosten.

Die Hauptschwierigkeit bei bekannten Hör- und Sprechkapseln, die nach dem elektrodynamischen Prinzip arbeiten, liegt darin, daß sie gegenüber äußeren magnetischen Wechselfeldern zu empfindlich sind. Der bekannte elektrodynamische Wandler besitzt eine Empfindlichkeit S = -53 dB, bezogen auf 1 V/Pa. Dieser Wandler besitzt eine Unempfindlichkeit gegen äußere Wechselfelder, welche besser als diejenige durchschnittlicher Wandler mit Schwingspule auf dem Markt ist.

Die Empfindlichkeit P gegen äußere Magnetfelder in der Größenordnung von $10^{-7}$T in einem Frequenzbereich von 50 Hz bis 4 kHz weist folgenden Wert auf:

$$P < S - 35\,dB = -53 - 35\,dB = -88\,dB$$

Eine weitere Schwierigkeit bei den bekannten Telefonapparaten besteht darin, daß die eingesetzten Sprechkapseln zu empfindlich gegenüber statischer Elektrizität sind. Wegen des geringen Platzes in dem für die Sprechkapsel vorgesehenen Teil des Hörers und wegen der erwünschten Ansprechempfindlichkeit, ist der Abstand zwischen der Außenseite des Sprechkapselendes des Hörers und der Oberfläche des Hörers üblicherweise sehr gering. In einigen Ländern müssen die Telephonapparate eine Prüfspannung von 15 kV zwischen der Außenseite des Sprechkapselendes des Hörers und den Anschlüssen des Telephonapparates aushalten. Das bedeutet, daß der Wandler für sich genommen eine Spannungsfestigkeit von etwa 12 kV zwischen Vorderseite und seinen Anschlüssen aufweisen muß.

Das der Erfindung zugrunde liegende technische Problem besteht darin, die Unempfindlichkeit des Wandlers gegenüber magnetischen und elektrischen Feldern zu verbessern.

Dieses technische Problem ist erfindungsgemäß gelöst durch die technischen Merkmale des kennzeichnenden Teils des Anspruchs 1.

Ein solcher Wandler weist in seiner Grundausführung die gleiche akustische Ansprechempfindlichkeit S wie vorstehend erwähnt auf, ihre Empfindlichkeit gegenüber äußeren magnetischen Feldern beträgt P = -108 dB, das ist eine Verbesserung gegenüber dem bekannten Wandler von 20 dB.

Weitere Verbesserungen des erfindungsgemäßen Wandlers im Vergleich zu den bekannten Wandlern sind:

Verbesserung der magnetischen Schirmung.

Weist einen akustischen Eingangswiderstand auf.

Mechanischer Schutz der empfindlichen Membran.

Zusammenhalt des Magnetsystems.

Erhöhung der elektrischen Überschlagsspannung zwischen Deckel und Anschlüssen.

Vorteilhafte Ausgestaltungen der Erfindung sind in den Ansprüchen 2 bis 9 enthalten.

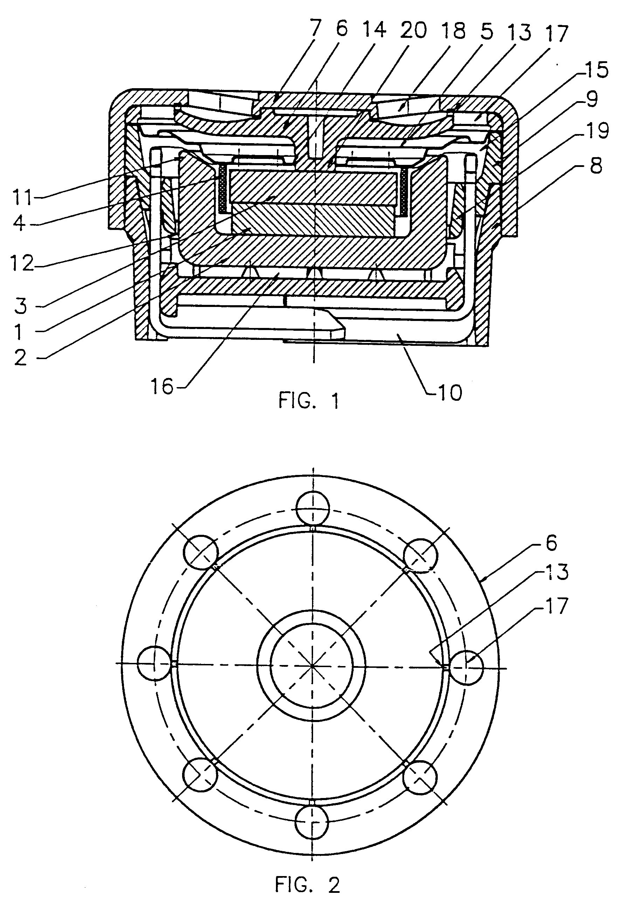

Sie ist nachstehend anhand eines in den Figuren 1 und 2 gezeigten Ausführungsbeispieles erläutert.

Es zeigen:

Fig. 1 den Querschnitt des Wandlers und

Fig. 2 die Draufsicht auf den Einsatz.

Der elektrodynamische Wandler enthält ein Magnetsystem 1, 2, 3, eine Schwingspule 4 und eine Membran 5, welche zwischen dem Deckel 7 und dem Gehäuse 8 angeordnet sind. Das Magnetsystem besteht aus einem Magnet 1, einer äußeren Polplatte 2 und einer inneren Polplatte 3. Der Einsatz 6 ist zwischen dem Magnetsystem und dem Deckel 7 angeordnet. Die Membran 5 ist mit einem Tragring 9 verbunden, welcher auch zwei Anschlüsse 10 trägt.

Die äußere Polplatte 2 besitzt eine einfache Form und geringe Abmessungen, wodurch sie kostengünstig ist. Um eine verbesserte magnetische Schirmung der Schwingspule zu erreichen, ist die äußere Kante 11 der äußeren Polplatte 2 so weit abgeschrägt als es die Form des Einsatzes 6 und der Membran 5 gestatten. Das ist dadurch erreicht, daß der mittlere Teil des Einsatzes 6 in Richtung zum Deckel 7 hin trichterartig ausgebildet ist, welches auch einen entsprechend gestalteten mittleren Teil der Membran 5 gestattet. Die Kante 11 der äußeren Polplatte 2 kann auch eine andere Form aufweisen, um die Schwingspule in ausreichender Weise durch dieses Eisenteil abzuschirmen.

Der Einsatz 6 legt - wie aus Fig. 1 ersichtlich - die axiale Lage des Magnetsystems bezüglich des Deckels 7 und der Membran 5 fest, da der Deckel 7 das Gehäuse 8 gegen den unteren Teil der äußeren Polplatte 2 drückt. Das ist ein Vorteil des Einsatzes 6. Häufig ist die äußere Polplatte mit Stiften, Vorsprüngen oder dgl. versehen, um das Magnetsystem in der richtigen Lage im Wandler festzuhalten. Solche Stifte und Vorsprünge sind nun nicht mehr erforderlich und die Stärke des für den Deckel verwendeten Werkstoffes kann sehr gering sein, wodurch die Schirmung vergrößert wird.

Zum Schutz gegen äußere Magnetfelder ist der Deckel 7 aus Metall, wie Eisen, hergestellt. Der Deckel dämpft diese Felder durch gegenelektromotorische Kräfte wegen der elektrischen Leitfähigkeit des Eisens und durch einen magnetischen Nebenschluß zur Schwingspule wegen der Magnetisierbarkeit des Eisens.

Um eine ausreichende Dämpfung zu erzielen, muß der Werkstoff des Deckels ziemlich dick sein, d.h. in der Größenordnung von 0,5 bis 1 mm; es ist daher nicht möglich, den erforderlichen akustischen Eingangswiderstand durch Schlitze im Deckel herzustellen. Der notwendige akustische Eingangswiderstand wird jedoch durch Verbindungsöffnungen 13 am äußeren Rand des Einsatzes 6 erzielt, welche von der Innenfläche des Deckels 7 überdeckt sind. Diese Verbindungsöffnungen sollten vorzugsweise einen Querschnitt aufwiesen, der dem eines kreisförmigen Loches mit einem Druchmesser von 0,1 bis 0,3 mm und einer Länge von 0,1 bis 0,4 mm entspricht. Ein weiterer Vorteil des Einsatzes 6 besteht darin, daß der akustische Eingangswiderstand nicht mehr im Deckel untergebracht werden muß, sondern die großen Schlitze oder Löcher 18 unabhängig davon dimensioniert werden können. Die Anzahl der Schlitze 18 kann der Anzahl der Verbindungsöffnungen 13 und der Öffnungen 17 im Einsatz 6 entsprechen; sie beträgt vorzugsweise 3 bis 8.

Der Einsatz 6 ist mit einer Anzahl von Öffnungen 17 versehen, welche gegenüber den Schlitzen 18 im Deckel 7 versetzt angeordnet sind. Darin liegt ein weiterer Vorteil des Einsatzes 6. Wenn der Deckel mit den üblichen großen Schlitzen 18 versehen ist, besteht die Gefahr der Beschädigung der empfindlichen Membran durch spitze Gegenstände, wie angespitzte Bleistifte, Haarnadeln oder dgl., sofern die Öffnungen 17 im Einsatz 6 gegenüber den Schlitzen 18 im Deckel nicht versetzt angeordnet sind. Die Öffnungen 17 im Einsatz 6 und die Schlitze 18 im Deckel 7 stehen über die Verbindungsöffnungen 13 miteinander in Verbindung und bilden ein Labyrinth für die Schallwellen.

Ein weiterer Vorteil des Einsatzes 6 besteht darin, daß das Magnetsystem nicht in Einzelteile zerfällt, wenn der Hörer einer starken Beschleunigung ausgesetzt wird, und zwar ohne daß die innere und äußere Polplatte mit dem Magnet verklebt sind. Bei den bekannten Wandlern sind die Magnetsysteme vernietet oder vergossen. Dafür wird ein Loch im Magnet benötigt, wodurch er größer und teurer ist, so daß auch andere Teile des Übertragers größer und teurer werden.

Es ist eine allgemeine Anforderung an Wandler für Telephone, daß er auf Frequenzen unter 300 Hz nicht anspricht. Es ist allgemein bekannt, die Ansprechempfindlichkeit durch eine Öffnung, z.B. einem Schlitz oder einem Loch, in der Membran zu verkleinern.

Eine solche Öffnung weist jedoch den Nachteil auf, daß die Entfernung zwischen der Oberfläche des Deckels durch die Öffnung zu den Metallteilen, und damit zu den Anschlüssen, gering ist. Das führt zu einer niedrigen Überschlagsspannung. Der Einsatz 6 besitzt einen sich in axialer Richtung erstreckenden zylindrischen Fortsatz 20, welcher durch eine Öffnung 14 in der Membran hindurchragt und in Berührung mit der inneren Polplatte 3 steht. Ein weiterer Vorteil des Einsatzes 6 besteht somit darin, daß der für die Überschlagsspannung maßgebende Abstand zwischen dem Deckel und den Metallteilen vergrößert ist. Überschläge haben nun folgenden Weg zurückzulegen: Vom Deckel 7 durch die Öffnungen 17 im Einsatz 6 die Membran entlang durch Membranöffnung 14 zu den Eisenteilen. Der Zylinderspalt zwischen dem Fortsatz 20 im Einsatz 6 und der Membranöffnung 14 ist in der Größenordnung von 0,1 bis 0,3 mm breit und 3,0 bis 9,0 mm lang.

Wenn die Abmessungen des Wandlers begrenzt sind und wenn der zylindrische Teil des Deckels 7 wegen der Schirmung möglichst nahe an der Schwingspule 4 angeordnet sein soll, dann ist nur sehr wenig Raum zur Bildung eines akustischen Widerstandes zwischen dem Raum 15 hinter der Membran und dem rückwärtigen Raum 16 vorhanden. Diese Art der akustischen Kopplung ist von verschiedenen Wandlern her bekannt, meist in der Art, daß ein oder mehrere Öffnungen mit einem Gewebe bedeckt sind oder daß eine Anzahl von kreisförmigen Stiften in eine entsprechende Anzahl von quadratischen Öffnungen hineinragen. Keine dieser bekannten Lösungen ist optimal; sie ist bei dem erfindungsgemäßen Wandler durch eine bessere Lösung ersetzt. Der innere Teil 19 des Tragrings 9 ist elastisch ausgebildet, so daß er gut auf die äußere Polplatte 2 paßt, und er ist mit einigen flachen Vertiefungen 12 versehen, welche den erwünschten akustischen Widerstand zwischen den Räumen 15 und 16 bilden. Die Vertiefungen 12 können gleichzeitig beim Spritzen des Tragrings 9 mit hergestellt werden.

Der Einsatz 6 ist aus einem nicht magnetisierbaren, elektrisch isolierenden Werkstoff, wie einem Polyamid oder ABS (Acrylnitril-Butadien-Styrol-Polymerisat) hergestellt. Er berührt die Innenseite des Deckels 7.

Der elektrische Anschluß des neuen Wandlers weist die Besonderheit auf, daß er sowohl den Standard-Anschluß mit den Abmessungen 0,5 x 2.8 x 7,0 mm als auch die Standard-Druckverbindung innerhalb eines sehr kleinen Raumes gestattet, welcher vom unteren Rand des Gehäuses 8 umgrenzt ist. Die mit der Membran 9 verbundenen Anschlüsse 10 ragen durch das Gehäuse 8 hindurch. Wenn die Anschlüsse 10 mit der Schwingspule verbunden worden sind und der Deckel 7 aufgesetzt worden ist, werden die Anschlüsse in der gezeigten Weise umgebogen.

## Patentansprüche

1. Elektrodynamischer Wandler mit einer Schwingspule (4), einer Membran (5) und einem Magnetsystem (1, 2, 3), welche von einem Gehäuse (8) und einem Deckel (7) umschlossen sind, wobei der Deckel (7) aus Metall besteht und mit Schlitzen oder Löchern (18) versehen ist, und wobei der Wandler einen Einsatz (6) aufweist, der sich zwischen dem Deckel (7) und der Membran (5) befindet und Öffnungen (17) aufweist, wobei die Membran zwischen dem Deckel (7) und dem Magnetsystem (1,2,3) angeordnet ist, welche Öffnungen (17) versetzt zu den Schlitzen oder Löchern (18) im Deckel (7) angeordnet sind, und zwischen den Öffnungen (17) und den Schlitzen oder Löchern (18) Verbindungsöffnungen (13) vorhanden sind, dadurch gekennzeichnet, dass der Deckel (7) eine Stärke von 0,5 - 1,0 mm aufweist, und dass der Einsatz (6) mit einem sich in axialer Richtung erstreckenden Fortsatz (20) versehen ist, welcher eine Öffnung (14) in der Membran (5) durchdringt und sich auf dem Magnetsystem abstützt.

2. Wandler nach Anspruch 1, dadurch gekennzeichnet, dass der Einsatz (6) axial zwischen der Innenseite des Deckels (7) und dem Magnetsystem (1, 2, 3) eingespannt ist.

3. Wandler nach den Ansprüchen 1-2, dadurch gekennzeichnet, dass ein zylindrischer Spalt zwischen dem Fortsatz (20) und Membranöffnung (14) vorhanden ist, der eine Breite von 0,1 bis 0,3 mm und eine Länge von 3,0 bis 9,0 mm aufweist.

4. Wandler nach den Ansprüchen 1-3, dadurch gekennzeichnet, dass der Einsatz (6) eine kreisförmige Berührung mit der Innenseite des Deckels (7) aufweist.

5. Wandler nach den Ansprüchen 1-4, dadurch gekennzeichnet, dass die Verbindungsöffnungen (13) aus rinnenförmigen Vertiefungen in der Oberfläche des Einsatzes (6) bestehen, welche von der Innenfläche des Deckels (7) überdeckt sind.

6. Wandler nach den Ansprüchen 1-5, dadurch gekennzeichnet, dass die Verbindungsöffnungen (13) einen Querschnitt aufweisen, welcher einem kreisförmigen Loch mit einem Druchmesser von 0,1 bis 0,3 mm und einer Länge von 0,1 bis 0,4 mm entspricht, und dass 3 bis 8 Verbindungsöffnungen (13) vorhanden sind.

7. Wandler nach den Ansprüchen 1-6, dadurch gekennzeichnet, dass die Schlitze oder Löcher (18) in dem Deckel (7) auf einem Kreis angeordnet sind, der einen kleineren Durchmesser aufweist als der Kreis, auf dem die im Einsatz (6) vorhandenen Öffnungen (17) angeordnet sind.

8. Wandler nach den Ansprüchen 1-7, dadurch gekennzeichnet, dass der mittlere Teil des Einsatzes (6) zum Deckel hin trichterförmig ausgebildet ist und sich zwischen diesem und dem abgeschrägten Ende der Polplatte (2) die entsprechend geformte Membran (5) erstreckt.

9. Wander nach den Ansprüchen 1-8, dadurch gekennzeichnet, dass der Einsatz (6) aus einem nicht magnetisierbaren, elektrisch nichtleitenden Werkstoff, wie Polyamid oder ABS, besteht.

## Claims

1. An electrodynamic transducer comprising a moving coil (4), a diaphragm (5) and a magnet system (1, 2, 3) which are enclosed by a casing (8) and a cover (7), wherein the cover (7) consists of metal and is provided with slits or holes (18) and wherein the transducer has an insert (6) which is disposed between the cover (7) and the diaphragm (5) and has openings (17), wherein the diaphragm is arranged between the cover (7) and the magnet system (1, 2, 3), which openings (17) are arranged in displaced relationship with respect to the slits or holes (18) in the cover (7) and connecting openings (13) are present between the openings (17) and the slits or holes (18), characterised in that the cover (7) is of a thickness of 0.5 - 1.0 mm and that the insert (6) is provided with an axially extending projection (20) which passes through an opening (14) in the diaphragm (5) and bears against the magnet system.

2. A transducer according to claim 1 characterised in that the insert (6) is axially clamped between the inside of the cover (7) and the magnet system (1, 2, 3).

3. A transducer according to claims 1 - 2 characterised in that there is a cylindrical gap between the projection (20) and the diaphragm opening (14), which is of a width of 0.1 to 0.3 mm and a length of 3.0 to 9.0 mm.

4. A transducer according to claims 1 - 3 characterised in that the insert (6) has circular contact with the inside of the cover (7).

5. A transducer according to claims 1 - 4 characterised in that the connecting openings (13) comprise channel-shaped depressions in the surface of the insert (6), which are covered over by the inside surface of the cover (7).

6. A transducer according to claims 1 - 5 characterised in that the connecting openings (13) are of a cross-section which corresponds to a circular hole of a diameter of 0.1 to 0.3 mm and a length of 0.1 to 0.4 mm, and that there are 3 to 8 connecting openings (13).

7. A transducer according to claims 1 - 6 characterised in that the slits or holes (18) in the cover (7) are arranged on a circle which is of a smaller diameter than the circle on which the openings (17) provided in the insert (6) are arranged.

8. A transducer according to claims 1 - 7 characterised in that the central portion of the insert (6) is of a funnel-like configuration towards the cover and the correspondingly shaped diaphragm (5) extends between same and the bevelled end of the pole plate (2).

9. A transducer according to claims 1 - 8 characterised in that the insert (6) consists of a non-magnetisable, electrically non-conductive material such as polyamide or ABS.

## Revendications

1. Transducteur électrodynamique comportant une bobine mobile (4), une membrane (5) et un système magnétique (1, 2, 3), qui sont enfermés par un boîtier (8) et un couvercle (7), le couvercle (7) étant réalisé en métal et pourvu de fentes ou de trous (18), le transducteur présentant un insert (6), qui se trouve entre le couvercle (7) et la membrane (5) et présente des ouvertures (17), la membrane étant disposée entre le couvercle (7) et le système magnétique (1, 2, 3), et lesdites ouvertures (17) étant agencées de manière décalée par rapport aux fentes ou trous (18) dans le couvercle (7), et des ouvertures de liaison (13) étant prévues entre les ouvertures (17) et les fentes ou trous (18), caractérisé en ce que le couvercle (7) présente une épaisseur de 0,5 à 1,0 mm, et en ce que l'insert (6) est muni d'un prolongement (20) s'étendant en direction axiale, qui traverse une ouverture (14) dans la membrane (5), et s'appuie sur le système magnétique.

2. Transducteur selon la revendication 1, caractérisé en ce que l'insert (6) est enserré axialement, entre le côté intérieur du couvercle (7) et le système magnétique (1, 2, 3).

3. Transducteur selon les revendications 1 à 2, caractérisé en ce qu'entre le prolongement (20) et l'ouverture de membrane (14) est prévu un interstice cylindrique, qui présente une largeur de 0,1 à 0,3 mm et une longueur de 3,0 à 9,0 mm.

4. Transducteur selon les revendications 1 à 3, caractérisé en ce que l'insert (6) réalise un contact de forme circulaire avec le côté intérieur du couvercle (7).

5. Transducteur selon les revendications 1 à 4, caractérisé en ce que les ouvertures de liaison (13) sont formées par des creux en forme de canal dans la surface de l'insert (6), qui sont recouverts par la surface intérieure du couvercle (7).

6. Transducteur selon les revendications 1 à 5, caractérisé en ce que les ouvertures de liaison (13) présentent une section transversale, qui correspond à un trou de forme circulaire d'un diamètre de 0,1 à 0,3 mm et d'une longueur de 0,1 à 0,4 mm, et en ce que sont prévues 3 à 8 ouvertures de liaison (13).

7. Transducteur selon les revendications 1 à 6, caractérisé en ce que les fentes ou trous (18) dans le couvercle (7) sont agencés sur un cercle, qui présente un diamètre inférieur à celui du cercle sur lequel sont agencées les ouvertures (17) prévues dans l'insert (6).

8. Transducteur selon les revendications 1 à 7, caractérisé en ce que la partie centrale de l'insert (6) présente une configuration en forme de trémie en direction du couvercle, et en ce qu'entre celui-ci et l'extrémité biseautée de la joue magnétique (2), s'étend la membrane (5) de configuration correspondante appropriée.

9. Transducteur selon les revendications 1 à 8, caractérisé en ce que l'insert (6) est réalisé en un matériau non magnétisable, électriquement non conducteur, tel qu'un polyamide ou un ABS.

FIG. 1

FIG. 2